# FASCICULE DE BREVET EUROPEEN

(11) **EP 2 962 943 B1**
(45) Date de publication et mention de la délivrance du brevet: **20.03.2019**
(21) Numéro de dépôt: 15175059.3
(22) Date de dépôt: 02.07.2015
(51) Int. Cl.: B64G 1/10, B64G 1/24, G01C 1/00, H04N 5/232, H04N 5/28

(54) **PROCEDE D'OBSERVATION D'UNE REGION DE LA SURFACE TERRESTRE, NOTAMMENT SITUEE A DES LATITUDES ELEVEES ; STATION SOL ET SYSTEME SATELLITAIRE POUR LA MISE EN UVRE DE CE PROCEDE**
VERFAHREN ZUR BEOBACHTUNG EINER REGION DER ERDOBERFLÄCHE, INSBESONDERE EINER REGION IN HÖHEREN BREITENGRADEN, BODENSTATION UND SATELLITENSYSTEM ZUR UMSETZUNG DIESES VERFAHRENS
METHOD FOR OBSERVING A REGION OF THE EARTH'S SURFACE, IN PARTICULAR LOCATED AT HIGH LATITUDES; GROUND STATION AND SATELLITE SYSTEM FOR IMPLEMENTING SAID METHOD

(30) Priorité: 04.07.2014 FR 1401509
(43) Date de publication de la demande: 06.01.2016
(73) Titulaire: THALES, 92400 Courbevoie (FR)
(72) Inventeur: SAINCT, Hervé, 06150 Cannes-La-Bocca (FR); SOULIGNAC, Vincent, 06150 Cannes-La-Bocca (FR)
(74) Mandataire: Priori, Enrico

(56) Documents cités:
- WO-A1-2012/040828
- ALEXANDER P. TRISHCHENKO ET AL: "Spatial and Temporal Sampling of Polar Regions from Two-Satellite System on Molniya Orbit", JOURNAL OF ATMOSPHERIC AND OCEANIC TECHNOLOGY, vol. 28, no. 8, 1 août 2011 (2011-08-01), pages 977-992, XP055190639, ISSN: 0739-0572, DOI: 10.1175/JTECH-D-10-05013.1
- ALEXANDER P. TRISHCHENKO ET AL: "Observing polar regions from space: advantages of a satellite system on a highly elliptical orbit versus a constellation of low Earth polar orbiters", CANADIAN JOURNAL OF REMOTE SENSING, vol. 38, no. 1, 13 janvier 2012 (2012-01-13), pages 12-24, XP055190644, ISSN: 0703-8992, DOI: 10.5589/m12-009

## Description

L'invention porte sur un procédé d'observation d'une région de la surface terrestre au moyen d'une pluralité de satellites partageant une même orbite, ainsi que sur un segment sol et sur un système satellitaire pour la mise en oeuvre d'un tel procédé.

L'invention s'applique en particulier à l'observation de régions de la surface terrestre situées à une latitude élevée (supérieure ou égale à 60° Nord ou Sud) au moyen de satellites situés sur des orbites elliptiques élevées (HEO, pour « Higly Elliptical Orbit ») et inclinées. Ces orbites se caractérisent par un périgée de basse altitude (typiquement de l'ordre de 500 - 1000 km), un apogée de haute altitude (typiquement supérieure à 35,786 km, l'altitude des satellites géostationnaires) et une inclinaison élevée (typiquement supérieure à 50° et le plus souvent comprise entre 50° et 90°). L'invention n'est toutefois pas limitée au cas des orbites HEO inclinées ; elle peut également s'appliquer au cas de satellites d'observations se déplaçant sur des orbites d'autres types, par exemple des orbites Tundra.

La plupart des services satellitaires d'observation sont opérés soit à partir de plateformes géostationnaires, soit à partir d'orbites basses défilantes. Les premières garantissent une très large couverture (environ un tiers du globe) et une permanence d'observation (cadence rapide de prise de vue, permettant par exemple de mesurer les déplacements des nuages), tandis que les secondes permettent de meilleures résolutions spatiales au détriment de la permanence (orbites défilantes avec une périodicité de type horaire ne permettant pas, par exemple, de mesurer des évolutions atmosphériques rapides).

Les orbites géostationnaires ont jusqu'ici été privilégiées pour des applications telles que le recalage de modèles de prévision météo, et ont donné lieu au développement de séries de satellites dédiés tels les « Météosat » et les « Goes », dont les images régulièrement répétées permettent de nombreuses estimations, notamment le calcul de vitesses de vent (AMV, « Atmospheric Motion Vectors »), produit premier et essentiel de la prévision climatique.

Il existe cependant des zones terrestres, aux hautes latitudes, pour lesquelles le positionnement d'un satellite en orbite géostationnaire - nécessairement localisée au-dessus de l'équateur - ne permet pas d'obtenir des images correctes, en raison de l'angle d'inclinaison important sous lequel ces régions sont observées.

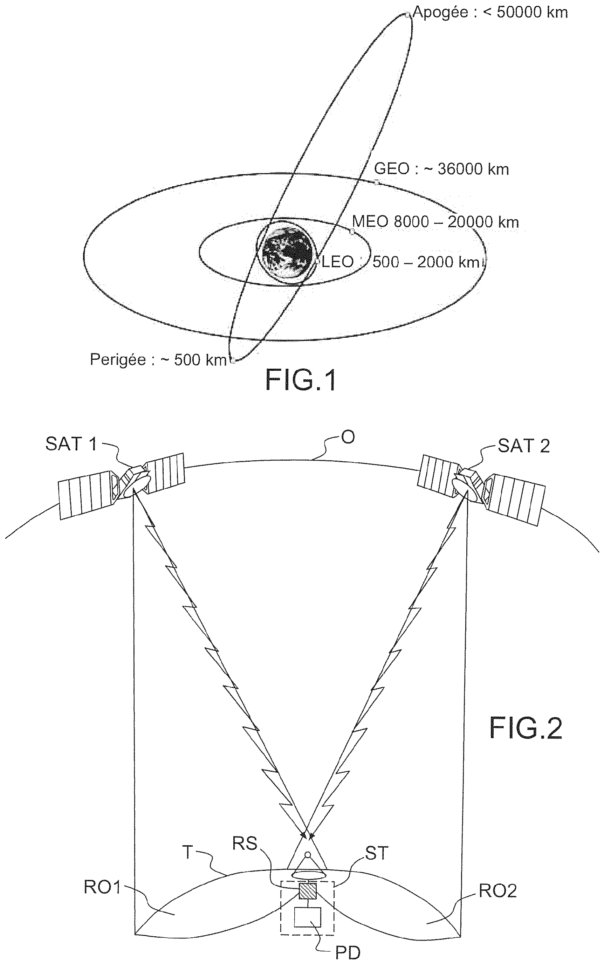

Pour cette raison de nombreux pays nordiques sont mal desservis par les systèmes satellitaires géostationnaires actuellement déployés, et envisagent des projets particuliers, sur des orbites plus adaptées. Il s'agira typiquement d'orbites de type HEO fortement inclinées, et dont l'apogée, beaucoup plus élevé que le périgée, se trouve dans le même hémisphère que le pays devant être desservi. L'inclinaison de l'orbite permet d'observer les régions situées à des latitudes élevées sous un angle d'inclinaison assez faible ; l'altitude élevée de l'apogée, par rapport à celle du périgée, assure que le satellite passe la plupart de sa période orbitale au-dessus de la région d'intérêt (par exemple 8h exploitables pour l'observation sur une orbite de période 12h). On peut mentionner à titre d'exemple les orbites TAP (« Three-APogee », c'est-à-dire orbite à trois apogées par jour) et Molnyia. La figure 1 permet de comparer une orbite HEO aux orbites basses (LEO, pour « Low Earth Orbit), moyennes (MEO, pour « Médium Earth Orbit ») et géostationnaires (GEO).

Dans la mesure où ces orbites ne sont pas géostationnaires, l'observation permanente à partir d'un seul satellite est impossible, ce qui conduit au déploiement de deux ou plusieurs satellites sur des orbites inclinées semblables ou non, décalés de façon que lorsque l'un des satellites perd la visibilité de la région d'intérêt (typiquement en retournant vers son périgée) un autre se trouve présent pour prendre le relai.
<1> Par exemple, l'article de A.P. Trishcenko et al., « Spatial and Temporal Sampling of Polar Regions from Two-Satellite System on Molniya Orbit » Journal of Atmospheric and Oceanic Technology, 2011 décrit l'utilisation de deux satellites placés sur des orbites Molniya pour réaliser une observation continue des régions circumpolaires du globe terrestre. Il indique également que, pendant des périodes de 2 à 4h toutes les 12h, les régions polaires peuvent être observées simultanément par les deux satellites.

Une conséquence de l'utilisation d'orbites HEO est que, contrairement aux systèmes d'observation géostationnaires, dans lesquels une image de la région d'intérêt est prise toute entière par un même satellite, les systèmes adaptés pour les hautes latitudes envisagent classiquement de partager régulièrement la couverture de la région d'intérêt entre deux satellites, avec une partie de ladite région d'intérêt couverte par une première « image partielle » acquise par l'un des satellites, pendant que l'autre partie de ladite région d'intérêt est couverte par une seconde « image partielle » acquise à peu près simultanément par le satellite suivant. En pareil cas, un recouvrement correct entre les deux parties d'images est nécessaire, ce qui crée une contrainte sur la localisation des satellites et leur orbite.

De nombreux systèmes de ce type ont été envisagés, tel par exemple le système canadien PCW qui considère entre autres des paires de satellites sur des orbites TAP, permettant d'obtenir des images régulières de la totalité de la région d'intérêt.

Ces orbites sont bien adaptées, géométriquement, aux missions d'observation. Cependant, elles présentent certains inconvénients importants :
- Premièrement, la mise à poste d'un satellite sur une orbite HEO a un coût énergétique important et d'autant plus grand que l'inclinaison et/ou l'altitude du périgée sont élevées. Cela limite la masse des satellites pouvant être embarqués sur un lanceur et/ou augmente le coût du lancement.
- Deuxièmement, la faible altitude du périgée - requise pour augmenter le temps passé à l'apogée, utile pour l'observation - provoque la circulation régulière du satellite dans ou près des ceintures de Van Allen, où l'environnement de radiation est extrêmement agressif: ceci limite sévèrement la durée de vie des électroniques embarquées, et/ou impose de lourds blindages ce qui accroît ultérieurement le coût au lancement du satellite.

Il serait donc souhaitable d'utiliser des orbites moins inclinées et/ou moins elliptiques, mais cela dégraderait de manière inacceptable l'observation (observation trop oblique et/ou lacunes de couverture de la région d'intérêt au niveau de la jonction entre les images partielles).

L'invention vise à surmonter les inconvénients précités de l'art antérieur. Plus particulièrement elle vise à permettre de relâcher les contraintes sur les orbites HEO des satellites utilisés pour l'observation de régions de la surface terrestre situées à des latitudes élevées, sans pour autant renoncer à une observation complète et continue.

A titre d'exemple, permettant d'apprécier l'importance d'une réduction d'inclinaison des orbites HEO, on peut considérer une orbite ayant un périgée à 200 km et un apogée à 42.000 km. Pour une telle orbite, les manuels des lanceurs permettent de vérifier qu'une réduction d'inclinaison de 64,9° à 51,8°, tous autres paramètres égaux, permettrait un quasi-doublement de la masse lançable.

Le but de l'invention est atteint en exploitant une augmentation de la cadence de prise de vue des images - rendue possible par les progrès technologiques des appareils imageurs embarqués - pour permettre un relâchement de la contrainte due au recouvrement entre images partielles et autoriser donc l'utilisation d'orbites moins coûteuses en termes d'inclinaison et/ou moins pénalisantes en termes de doses radiatives.

Un objet de l'invention permettant d'atteindre ce but est un procédé d'observation d'une région de la surface terrestre, dite région d'intérêt, mettant en oeuvre une pluralité de satellites se déplaçant le long d'au moins une orbite défilante, ledit procédé comportant :
- l'acquisition par au moins deux desdits satellites, au cours d'un même passage au-dessus de ladite région d'intérêt et lors de périodes d'acquisition successives, d'une pluralité d'images de la surface terrestre, dites images partielles, couvrant chacune une portion de ladite région d'intérêt ; et
- l'obtention d'une image couvrant la totalité de ladite région d'intérêt par fusion d'au moins deux dites images partielles pour chacun desdits au moins deux satellites, présentant un décalage temporel prédéfini entre leurs périodes d'acquisition, pour chacun desdits au moins deux satellites.

Selon différents modes de réalisation d'un tel procédé :
- Des images partielles, dites de même rang, peuvent être acquises en même temps par lesdits satellites; le nombre desdits satellites, ladite ou chaque dite orbite défilante et lesdites périodes d'acquisition étant choisis de telle sorte que que des images partielles de même rang, prises en combinaison, assurent une couverture partielle de ladite région d'intérêt, présentant des lacunes de couverture.
- Lesdites images partielles peuvent être obtenues par balayage et, lors de l'acquisition d'un premier ensemble d'images partielles de même rang, ledit balayage commençant à proximité desdites lacunes de couverture, tandis que, lors de l'acquisition ultérieure d'un deuxième ensemble d'images partielles de même rang, ledit balayage se terminant à proximité desdites lacunes de couverture
- Chaque dite image partielle peut être obtenue par balayage d'une région d'observation respective, déterminée de telle sorte qu'elle ne déborde pas de ladite région d'intérêt.
- Le procédé peut mettre en oeuvre exactement deux satellites.
- Lequel lesdits satellites peuvent être espacés le long d'une même orbite défilante.
- Ladite image couvrant la totalité de ladite région d'intérêt peut être obtenue par fusion d'exactement deux dites images partielles pour chacun desdits satellites, acquises lors de périodes d'acquisition successives.
- Ladite région d'intérêt peut présenter une forme de calotte sphérique.
- Ladite ou chaque dite orbite défilante peut être une orbite elliptique élevée inclinée - de type HEO - et ladite région d'intérêt peut être constituée par une portion de surface terrestre présentant une latitude supérieure ou égale à une valeur limite L, avec L≥50° et de préférence L≥60°.
- Le procédé peut comporter également une opération d'attribution, à chaque pixel de chaque dite image partielle, d'un ensemble d'informations représentatif d'un instant d'acquisition et d'un point de la surface terrestre correspondant audit pixel, ledit ensemble d'informations étant utilisé lors de la fusion desdites images partielles.

Un autre objet de l'invention est un segment sol comprenant :
- au moins un récepteur satellitaire configuré pour recevoir, depuis au moins deux satellites espacés le long d'une même orbite défilante, des signaux représentatifs d'images de la surface terrestre, dites images partielles, couvrant chacune une portion d'une même région dite d'intérêt et acquises lors de périodes d'acquisition successives au cours d'un même passage desdits satellites au-dessus de ladite région d'intérêt ; et
- un processeur de données configuré pour fusionner au moins deux dites images partielles pour chacun desdits au moins deux satellites, les dites images partielles reçues de chaque dit satellites présentant un décalage temporel prédéfini entre leurs périodes d'acquisition, afin d'obtenir une image couvrant la totalité de ladite région d'intérêt.

Encore un autre objet de l'invention est un système satellitaire d'observation d'une région de la surface terrestre, dite région d'intérêt, comprenant :
- un segment spatial comprenant une pluralité de satellites se déplaçant le long d'au moins une orbite défilante, configurés pour acquérir, au cours d'un même passage sur ladite région d'intérêt et lors de périodes d'acquisition successives, une pluralité d'images de la surface terrestre, dites images partielles, couvrant chacune une portion de ladite région d'intérêt, et pour transmettre lesdites images partielles à un segment sol ; et
- un segment sol tel que mentionné ci-dessus.

Selon un mode de réalisation avantageux d'un tel système, ladite ou chaque dite orbite défilante peut être une orbite elliptique élevée - de type HEO - et ladite région d'intérêt peut être constituée par tous les points de la surface terrestre présentant une latitude supérieure ou égale à une valeur limite L≥50° et de préférence L≥60°.

D'autres caractéristiques, détails et avantages de l'invention ressortiront à la lecture de la description faite en référence aux dessins annexés donnés à titre d'exemple dans lesquels :
- La figure 1 illustre des orbites LEO, MEO, GEO et HEO ;
- La figure 2 représente, de manière simplifiée, un système satellitaire d'observation d'une région de la surface terrestre au moyen d'une pluralité de satellites sur une orbite HEO convenant à la mise en oeuvre de l'invention ;
- La figure 3 illustre une couverture partielle, comportant des lacunes, d'une région d'intérêt aux hautes latitudes obtenue par fusion de deux images partielles acquises par deux satellites décalés le long d'une même orbite HEO ;
- La figure 4 illustre la couverture obtenue, de manière conventionnelle, par deux satellites décalés le long d'une même orbite HEO polaire ;
- Les figures 5a à 5c illustrent un premier mode de réalisation de l'invention ; et
- Les figures 6a à 6d illustrent un deuxième mode de réalisation de l'invention.

La figure 2 illustre très schématiquement un système satellitaire d'observation d'une région de la surface terrestre convenant à la mise en oeuvre de l'invention. De manière conventionnelle, le système comprend un segment spatial et un segment sol.

Le segment spatial comprend au moins deux satellites d'observation SAT1, SAT2 se déplaçant le long d'une même orbite O de type HEO. Etant donné que l'orbite est elliptique, la vitesse des satellites varie grandement entre l'apogée (vitesse minimale) et le périgée (vitesse maximale) ; par conséquent leur espacement est aussi variable dans le temps. Dans le cas où le nombre de satellites est égal à deux, leur espacement correspond à une demi-période orbitale, de telle façon que lorsque le satellite SAT1 est près de l'apogée, l'autre satellite SAT2 se trouve près du périgée et réciproquement.

Les satellites portent chacun un instrument d'observation, généralement à balayage (non représenté) permettant d'acquérir une image d'une portion de la surface terrestre. On appelle « région d'observation » la portion de la surface terrestre observée par chaque dit satellite à un instant donné (comme l'orbite O est défilante, les régions d'observation se déplacent avec les satellites). Sur la figure, les références RO1 et R02 indiquent les régions d'observation des deux satellites SAT1 et SAT2. Les satellites sont également équipés d'un émetteur leur permettant de transmettre en direction de la terre T des signaux représentatifs des images acquises.

Le segment sol comprend au moins une station terrestre ou station sol ST équipée d'un récepteur satellitaire RS pour recevoir les signaux transmis par les satellites SAT1, SAT2, ainsi qu'un processeur de données PD (ordinateur ou ensemble d'ordinateurs) permettant de traiter ces signaux pour reconstituer des images d'une région d'intérêt de la surface terrestre. En variante, le ou les récepteurs satellitaires et le processeur de données peuvent ne pas être co-localisés.

Le système peut comprendre plus de deux satellites - par exemple trois - et plus d'une station sol (il est usuel d'en utiliser deux ou plus pour augmenter le temps d'acquisition de chaque satellite). Les satellites constituant le segment spatial du système sont généralement identiques, mais cela n'est pas essentiel. De plus, ils ne partagent pas nécessairement une même orbite : plus généralement, on peut considérer que chaque satellite se déplace sur une orbite HEO propre, ces orbites (ou certaines d'entre elles) pouvant éventuellement coïncider.

Il convient de souligner que la figure 2 n'est pas à l'échelle. En particulier, elle sous-estime grandement l'altitude de l'orbite O et la distance entre les satellites.

Comme cela sera plus expliqué en détail ci-après, un système satellitaire d'observation selon l'invention se différencie d'un système selon l'art antérieur (par exemple, du type PCW précité) essentiellement par :
- le choix de l'orbite O, qui peut être moins inclinée et/ou moins elliptique ;
- la configuration des instruments d'acquisition portés par les satellites (cadence d'acquisition des images, balayage...) ; et
- le traitement des données mis en oeuvre par le processeur de données PD.

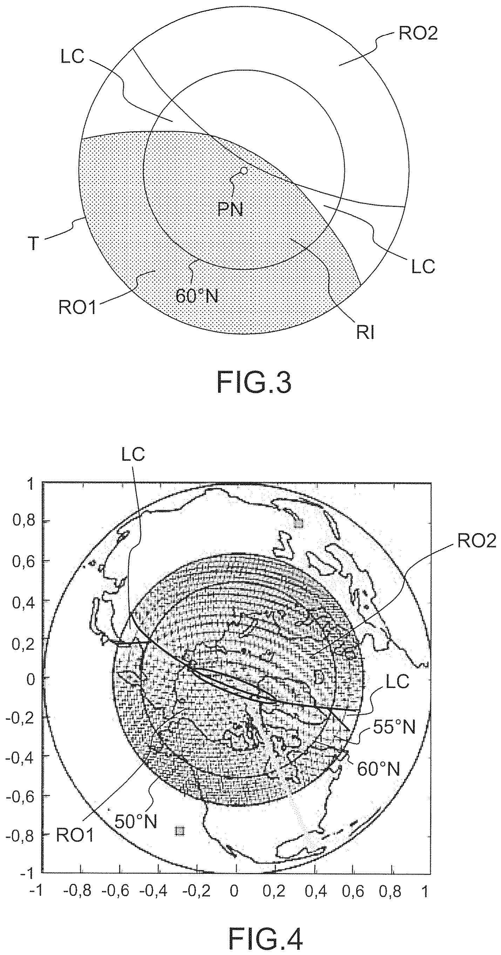

La figure 3 montre la Terre T vue par son pôle nord PN, avec une région d'intérêt RI en forme de calotte sphérique comprenant tous les points de latitude supérieure ou égale à 60°N. La figure met en évidence les régions d'observations à un instant donné des deux satellites SAT1, SAT2 constituant le segment spatial d'un système d'observation selon l'invention : RO1 et RO2. Il convient de noter que lorsque le satellite SAT1 est près de l'apogée, sa région d'observation couvre toute la région d'intérêt, tandis que le satellite SAT2 est trouve près du périgée et survole l'hémisphère sud. Il y a ensuite une période intermédiaire, dans laquelle SAT1 s'éloigne de l'apogée tandis que SAT2 s'y approche ; pendant cette période, les deux satellites ont chacun une visibilité partielle de la région d'intérêt. Enfin, on parvient à une configuration dans laquelle la région d'intérêt est observée uniquement par le satellite SAT2. La figure se rapporte à la période intermédiaire, et plus précisément à un instant où les deux régions d'observations RO1 (satellite SAT1) et R02 (SAT2) couvrent des portions à peu-près équivalentes de la région d'intérêt RI, la région RO1 étant en train de se rétrécir progressivement au bénéfice de R02. On remarque que les régions d'observation « débordent » de la région d'intérêt RI et se superposent partiellement, mais surtout que, en raison d'une orbite O insuffisamment adaptée (inclinaison trop faible et/ou apogée trop bas), elles laissent subsister deux lacunes de couverture, identifiées par la référence LC ; ces lacunes se déplacent dans le temps, et disparaissent lorsque la région d'intérêt est entièrement observée par un seul satellite. Le cahier des charges d'un système d'observation du type de la figure 2 exige, normalement, que des images couvrant la totalité de la région d'intérêt soient fournies à des intervalles réguliers, par exemple une toutes les 30 minutes. La présence des lacunes de couverture LC empêche d'atteindre cet objectif, et est donc inacceptable.

Conformément à l'art antérieur, il est possible de « fermer » les lacunes en augmentant l'inclinaison de l'orbite O des satellites SAT1, SAT2 et/ou l'altitude de son apogée, voire en prévoyant un satellite additionnel mais, comme expliqué plus haut, ces solutions sont coûteuses à mettre en oeuvre.

L'invention propose, au contraire, de relâcher les contraintes sur l'orbite O, et de « fermer » les lacunes de couverture qui en résultent en augmentant la cadence d'acquisition des images, ce qui est rendu possible par le progrès des instruments d'imagerie, et en exploitant la rotation de la Terre entre deux acquisitions d'images successives ou rapprochées.

Conformément à l'invention, les satellites SAT1 et SAT2 sont utilisés pour acquérir une première paire d'images partielles, correspondant aux régions d'observation RO1, RO2, au cours d'une première période d'acquisition de durée égale, par exemple, à 10 min (images partielles « du premier rang »). Ensuite, ces mêmes satellites sont utilisés pour acquérir une deuxième paire d'images partielles (« du deuxième rang ») au cours d'une deuxième période d'acquisition approximativement de même durée. Entre les deux périodes d'acquisition, la terre a tournée autour de son axe et les deux satellites ont avancé le long de leur orbite ; par conséquent, les lacunes de couverture se sont déplacées par rapport à la surface terrestre. On dispose ainsi de quatre images partielles qui, prises en combinaison, couvrent la totalité de la région d'intérêt et dont les mesures sont contemporaines à 20 minutes près, alors même que le recouvrement total de la région d'intérêt n'est pas possible à partir d'une seule paire d'images partielles acquises depuis l'orbite O.

Dans certains cas, la couverture peut être assurée par trois, au lieu de quatre, images partielles. Ainsi, lorsqu'un premier satellite s'éloigne de l'apogée tandis qu'un deuxième satellite apparait à l'horizon de la région d'intérêt, une image acquise uniquement par le premier satellite est combinée avec deux images partielles acquises juste après par les deux satellites. Plus tard, deux images partielles sont combinées avec une image acquise uniquement par le deuxième satellite après que le premier ait disparu à l'horizon.

On remarquera par ailleurs que, lorsque l'un des satellites se trouve près de l'apogée, il peut acquérir seul une image de la région d'intérêt sans besoin de combiner des images partielles.

Il convient de noter que, même dans le cas d'une acquisition « classique », la datation des pixels n'est pas la même sur toute l'image, car les images partielles sont acquises par balayage, ce qui prend du temps. D'ailleurs, dans un produit de type L1C on ne demande pas que tous les pixels soient simultanés, mais seulement que chacun d'entre eux soit daté et associé à un point de la surface terrestre.

Concrètement, pour la mise en oeuvre de l'invention on pourra procéder de la manière suivante :
- Tout d'abord il faut déterminer l'intervalle temporel maximal admissible entre deux images complètes, et vérifier que cet intervalle permette l'acquisition de deux images partielles. On détermine ainsi la temporisation des deux paires (ou plus) d'acquisitions d'images partielles.
- Ensuite, on relâche progressivement les contraintes de l'orbite O, en réduisant son inclinaison et/ou en abaissant son apogée, en vérifiant par simulation que la combinaison de deux paires (ou plus) d'acquisitions permet toujours la reconstitution d'images complètes de la région d'intérêt à la cadence requise.

Par exemple, deux satellites espacés d'une demi-période sur une orbite polaire (inclinée de 90° par rapport au plan équatorial) avec périgée à 29500 km et apogée à 54800 km permettent de couvrir toute la région de la surface terrestre de latitude supérieure ou égale à 60°N avec une cadence d'une image toutes les 10 minutes. Cela peut être vérifié sur la figure 4, où RO1 est la région observée par le satellite SAT1 six heures après son passage à l'apogée et R02 la région observée par le satellite SAT2 au même moment, c'est-à-dire six heures après son passage au périgée (dans un souci de brièveté, on appellera cet instant « apogée + 6h »). La figure permet aussi de vérifier que la couronne comprise entre 50°N et 60°N de latitude n'est pas observée correctement à cause de deux lacunes de couverture LC.

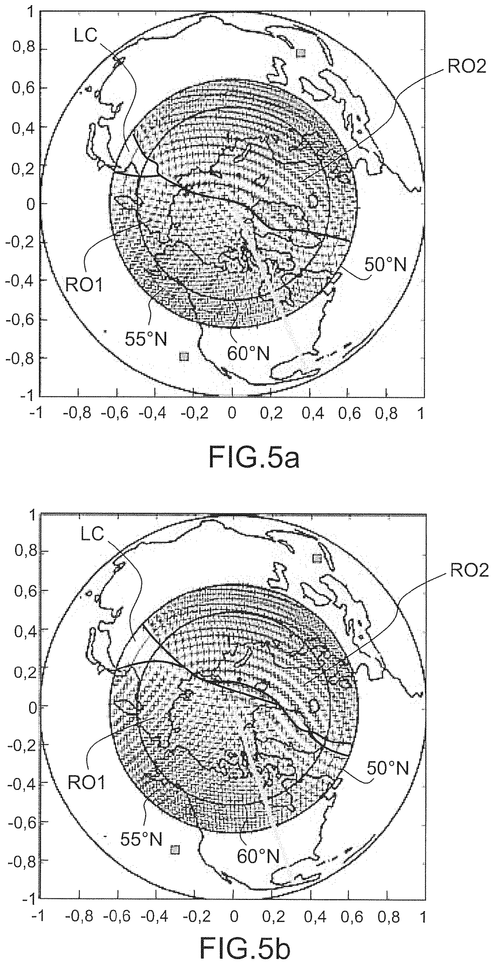

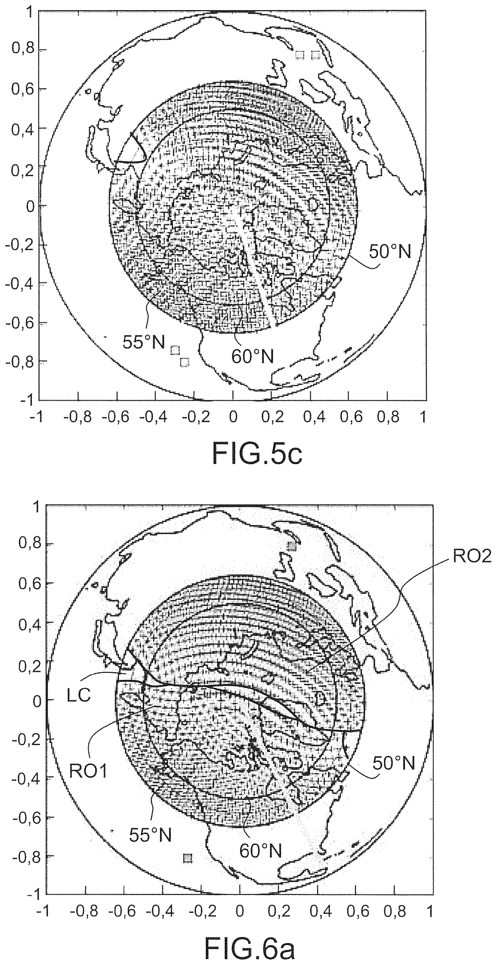

Si on réduit l'inclinaison à 85°, en laissant inchangés tous les autres paramètres, les lacunes de couverture s'étendent à l'intérieur de la région au-delà de 60°N de latitude, ce qui n'est pas acceptable. Cela peut être observé sur la figure 5a, correspondant à l'instant « apogée + 6h », comme sur la figure 5b, correspondant à l'instant « apogée + 6,333h », c'est-à-dire 20 minutes plus tard. Toutefois, si on combine les deux images (figure 5c), on obtient à nouveau une couverture complète au-delà de 60°N.

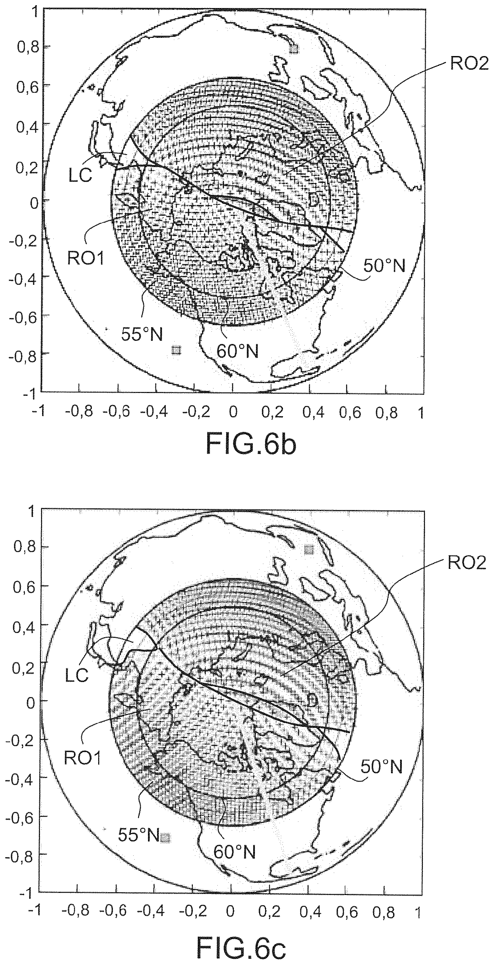

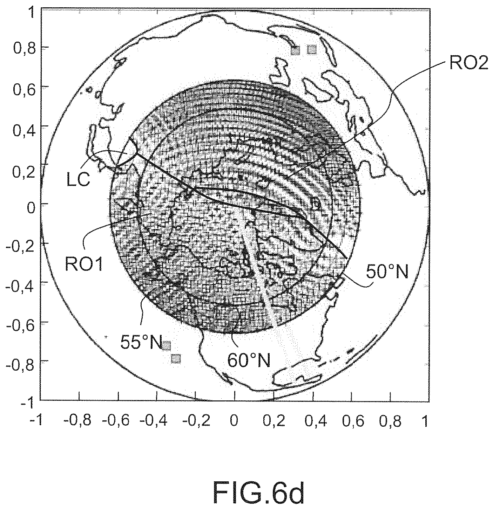

Réciproquement, la combinaison d'images acquises à des instants différentes permet d'étendre la couverture à des latitudes inférieures pour une inclinaison donnée de l'orbite des satellites. Les figures 6a, 6b (sensiblement identique à la figure 4) et 6c correspondent, respectivement, à une inclinaison d'orbite de 90° et aux instants « apogée + 5,83333h », « apogée + 6h » et « apogée + 5,3333h » ; la figure 6d correspond à une combinaison de ces images, prises sur un intervalle temporel de 30 minutes, ce qui est encore acceptable. On peut vérifier que l'image composite permet une couverture complète jusqu'à une latitude de 55° (cercle en trait pointillé). Cet exemple est intéressant car il montre un cas où l'on doit combiner plus de deux paires d'images élémentaires ou « sous-images » (trois, en l'espèce).

Les figures 4 à 5c permettent de vérifier que, après l'acquisition de deux paires de sous-images :
- la plupart des points de la région d'intérêt sont couverts par deux pixels, car vus deux fois par le même satellite ou une fois par chaque satellite ;
- certains de ces points sont couverts par trois ou quatre pixels, car vus simultanément par les deux satellites lors d'une acquisition, voire des deux ;
- et certains autres par un seul pixel, car situés en correspondance d'une lacune de couverture pour la première ou la deuxième acquisition, cette lacune étant comblée par l'autre acquisition. Dans une stratégie conventionnelle, prenant une seule image partielle par satellite, ces points n'auraient pas été couverts.

Après la double acquisition, il faut fusionner les quatre images partielles pour arriver à une image finale où chaque point est couvert par un seul pixel. Pour ceux des points de la zone d'intérêt qui se trouvent couverts par deux images ou plus, toute stratégie classique de reconstitution du pixel final à partir de l'ensemble des pixels originaux par combinaison, extrapolation, rééchantillonnage etc. est réalisable. Conformément à l'invention, la rotation terrestre ayant eu lieu entre la première et la dernière acquisition a déplacé les lacunes de couverture ; par conséquent les points de la région d'intérêt qui se trouvaient initialement en correspondance de l'une de ces lacunes sont désormais couverts par un (et un seul) pixel acquis lors de la seconde acquisition, et réciproquement les points se trouvant en correspondance d'une lacune de couverture lors de la seconde acquisition sont couverts par un pixel obtenu via la première acquisition. Pour ces points, il suffit de retenir le seul pixel qui leur correspond, dans l'ensemble des acquisitions disponibles (avant de, le cas échéant, effectuer un rééchantillonnage de l'image, ce qui est conventionnel).

Ces remarques peuvent être généralisées aux cas où on combine plus de deux paires de sous-images, comme par exemple dans le mode de réalisation des figures 6a - 6d.

Dans un mode de réalisation de l'invention particulièrement simple, on utilise deux satellites dotés d'imageurs identiques, qui acquièrent des images partielles de façon également identique. Dans ce mode de réalisation, chaque satellite acquiert - généralement par balayage - une image de l'ensemble de la portion de surface terrestre qui lui est accessible à un moment donné, même si elle déborde de la région d'intérêt, après quoi les pixels « excédentaires » (extérieurs à la région d'intérêt RI) sont simplement éliminés. Cette méthode n'est pas optimale, car elle fait dépenser inutilement du temps pour l'acquisition des pixels hors région d'intérêt. Il est donc plus avantageux d'utiliser deux satellites identiques, mais présentant des lois d'acquisition d'images différentes et variables au cours du temps en fonction de la position des satellites, de telle sorte que chaque satellite n'acquière que des pixels à l'intérieur de la région d'intérêt. Une telle programmation est complexe, mais parfaitement déterministe et prévisible, et peut donc être définie une fois pour toutes en fonction de la position du satellite sur son orbite, donc simplement en fonction du temps.

Un exemple d'une telle programmation consiste, à partir de la zone totale accessible à un moment donné par un satellite, à en soustraire la partie hors région d'intérêt, et à redéfinir la loi d'acquisition d'image de l'instrument (par exemple, par balayage) de façon qu'à la fin de l'acquisition d'image seule la région d'intérêt soit acquise. On pense par exemple à une loi d'acquisition par balayage de lignes successives dont chaque ligne serait interrompue dès qu'elle rencontre la frontière de la région d'intérêt, permettant sans aller plus loin de relancer immédiatement la ligne suivante à l'intérieur de la région (« programmation contrainte par la surface utile »). Dans le cas d'un instrument imageur dont le fonctionnement nécessiterait cependant des visées régulières de l'espace au-delà du bord de Terre à des fins par exemple d'étalonnage des détecteurs, l'on pourra étendre le balayage jusqu'et au-delà des bords de Terre à cet effet, aux seuls instants où l'étalonnage deviendra indispensable. Dans le cas général de deux ou plusieurs satellites localisés dans des positions quelconques sur leurs orbites, les durées d'acquisition des zones dévolues à chacun sont potentiellement différentes. La programmation contrainte par la surface utile peut également être appliquée si les deux satellites ne sont pas identiques.

Un autre exemple de contrainte de la programmation, qui peut être cumulé avec le précédent, consiste à définir les régions d'observation, et le parcours du balayage dans le cas d'une acquisition par balayage, de telle façon que l'ensemble des pixels obtenus soit le plus homogène possible sur le plan temporel. En d'autres termes il s'agit de choisir, parmi tous les balayages possibles couvrant l'ensemble de la région d'intérêt, celui donnant une image finale dans laquelle l'écart entre les dates d'acquisition de deux pixels quelconques est minimal Ceci peut être obtenu notamment en attribuant à chaque satellite une portion de la région d'intérêt à couvrir telle que le temps mis par chaque satellite pour obtenir l'image de cette portion soit identique ou proche de celui mis par l'autre satellite pour l'autre portion. Un autre critère, alternatif ou complémentaire, peut consister à choisir, lorsqu'un point de la région d'intérêt est vu par deux satellites, le pixel acquis par celui des satellites dont la projection au sol (point sub-satellite) est le plus proche dudit point de la région d'intérêt. Ce choix permet de minimiser le temps de balayage tout en privilégiant la qualité de prise de vue (d'autant meilleure que le point observé est proche du point sub-satellite.

Tout autre critère permettant de découper une zone-cible en deux parties de temps d'acquisition identiques ou proches reste valide dans cette approche.

Par ailleurs, il peut être avantageux de choisir les balayages mis en oeuvre par chaque satellite de telle façon que l'acquisition de la première paire d'images partielles commence à proximité des lacunes de couverture, et que l'acquisition de la deuxième (ou dernière) paire d'images partielles se termine à proximité desdites lacunes. Cela a pour effet qu'entre le début de la première image (acquisition près de la lacune) et la fin de la seconde image (acquisition à nouveau près de la lacune) il s'est écoulé le temps le plus long possible. Ceci est intéressant parce que la rotation de la Terre entre le début de la première imagerie et la fin de la seconde aura induit un déplacement plus important des lacunes de couverture par rapport à la surface terrestre, permettant de combler des lacunes plus grandes, et donc de relâcher davantage les contraintes sur l'orbite des satellites.

Jusqu'à présent, seul le cas d'un système à deux satellites dans lequel chaque image finale est constituée à partir de deux ou trois paires d'images partielles a été considéré, mais il ne s'agit pas là d'une limitation essentielle. En effet, le segment spatial du système d'observation peut comprendre un nombre quelconque - strictement supérieur à un - de satellites. Par exemple on peut considérer le cas d'un système à trois satellites dont seulement deux au plus observent la région d'intérêt à tout instant. On peut également considérer un système dans lequel, à certains instants, trois satellites ou plus se partagent l'observation de la région d'intérêt. En outre, on peut considérer des variantes du procédé de l'invention dans lesquelles on acquiert plus de trois images partielles par satellite.

Une variante permet également d'insérer des « zooms » sur une région critique (par exemple durant un épisode météorologique local dangereux) à l'intérieur du cycle normal ; l'on peut plus généralement concevoir un plan d'acquisition d'images « habituel » qui comporte des marges prévues pour permettre de tels « zooms » en cas d'épisode météorologique dangereux (ou tout autre événement critique à observer rapidement).

La région d'intérêt ne doit pas nécessairement être en forme de calotte sphérique, ni être limitée aux régions circumpolaires, bien qu'il s'agisse là d'un mode de réalisation préféré de l'invention ; elle peut par exemple être définie par les territoires et eaux territoriales d'un pays ou d'un groupe de pays donné.

En outre, il n'est pas essentiel que les satellites se déplacent le long d'une ou plusieurs orbites inclinées. Au contraire, l'invention peut également être mise en oeuvre au moyen de satellites se déplaçant dans une orbite située sensiblement dans un plan équatorial. Il pourrait s'agit, par exemple, de deux microsatellites (ou plus) lancés en passagers sur un tir en orbite de transfert géostationnaire avec une période de 12h.

## Revendications

1. Procédé d'observation d'une région de la surface terrestre, dite région d'intérêt (RI), mettant en oeuvre une pluralité de satellites (SAT1, SAT2) se déplaçant le long d'au moins une orbite défilante (0), ledit procédé comportant :
- l'acquisition par au moins deux desdits satellites, au cours d'un même passage au-dessus de ladite région d'intérêt et lors de périodes d'acquisition successives, d'une pluralité d'images de la surface terrestre, dites images partielles, couvrant chacune une portion (R01, R02) de ladite région d'intérêt ; **caractérisé en ce qu'**il comprend également :
- l'obtention d'une image couvrant la totalité de ladite région d'intérêt par fusion d'au moins deux dites images partielles pour chacun desdits au moins deux satellites, présentant un décalage temporel prédéfini entre leurs périodes d'acquisition, pour chacun desdits au moins deux satellites.

2. Procédé selon la revendication 1 dans lequel des images partielles, dites de même rang, sont acquises en même temps par lesdits satellites; le nombre desdits satellites, ladite ou chaque dite orbite défilante et lesdites périodes d'acquisition étant choisis de telle sorte que que des images partielles de même rang, prises en combinaison, assurent une couverture partielle de ladite région d'intérêt, présentant des lacunes de couverture (LC).

3. Procédé selon la revendication 2 dans lequel lesdites images partielles sont obtenues par balayage et, lors de l'acquisition d'un premier ensemble d'images partielles de même rang, ledit balayage commence à proximité desdites lacunes de couverture, tandis que, lors de l'acquisition ultérieure d'un deuxième ensemble d'images partielles de même rang, ledit balayage se termine à proximité desdites lacunes de couverture

4. Procédé selon l'une des revendications précédentes dans lequel chaque dite image partielle est obtenue par balayage d'une région d'observation respective (RO1, RO2), déterminée de telle sorte qu'elle ne déborde pas de ladite région d'intérêt.

5. Procédé selon l'une des revendications précédentes mettant en oeuvre exactement deux satellites.

6. Procédé selon l'une des revendications précédentes dans lequel lesdits satellites sont espacés le long d'une même orbite défilante (O).

7. Procédé selon l'une des revendications précédentes, dans lequel ladite image couvrant la totalité de ladite région d'intérêt est obtenue par fusion d'exactement deux dites images partielles pour chacun desdits satellites, acquises lors de périodes d'acquisition successives.

8. Procédé selon l'une des revendications précédentes, dans lequel ladite région d'intérêt présente une forme de calotte sphérique.

9. Procédé selon l'une des revendications précédentes, dans lequel ladite ou chaque dite orbite défilante est une orbite elliptique élevée inclinée - de type HEO - et ladite région d'intérêt est constituée par une portion de surface terrestre présentant une latitude supérieure ou égale à une valeur limite L, avec L≥50° et de préférence L≥60°.

10. Procédé selon l'une des revendications précédentes comportant également une opération d'attribution, à chaque pixel de chaque dite image partielle, d'un ensemble d'informations représentatif d'un instant d'acquisition et d'un point de la surface terrestre correspondant audit pixel, et dans lequel ledit ensemble d'informations est utilisé lors de la fusion desdites images partielles.

11. Segment sol comprenant :
- au moins un récepteur satellitaire (RS) configuré pour recevoir, depuis au moins deux satellites (SAT1, SAT2) espacés le long d'une même orbite défilante, des signaux représentatifs d'images de la surface terrestre, dites images partielles, couvrant chacune une portion (RO1, RO2) d'une même région dite d'intérêt (RI) et acquises lors de périodes d'acquisition successives au cours d'un même passage desdits satellites au-dessus de ladite région d'intérêt ; et
- un processeur de données (PD) ;
**caractérisé en ce que** ledit processeur de données est configuré pour fusionner au moins deux dites images partielles pour chacun desdits au moins deux satellites, les dites images partielles reçues de chaque dit satellites présentant un décalage temporel prédéfini entre leurs périodes d'acquisition, afin d'obtenir une image couvrant la totalité de ladite région d'intérêt.

12. Système satellitaire d'observation d'une région de la surface terrestre, dite région d'intérêt (RI), comprenant :
- un segment spatial comprenant une pluralité de satellites (SAT1, SAT2) se déplaçant le long d'au moins une orbite défilante (0), configurés pour acquérir, au cours d'un même passage sur ladite région d'intérêt et lors de périodes d'acquisition successives, une pluralité d'images de la surface terrestre, dites images partielles, couvrant chacune une portion (R01, R02) de ladite région d'intérêt, et pour transmettre lesdites images partielles à un segment sol ; et
- un segment sol selon la revendication 11.

13. Système selon la revendication 12 dans lequel ladite ou chaque dite orbite défilante est une orbite elliptique élevée - de type HEO - et ladite région d'intérêt est constituée par tous les points de la surface terrestre présentant une latitude supérieure ou égale à une valeur limite L≥50° et de préférence L≥60°.

## Patentansprüche

1. Verfahren zur Beobachtung einer Region der Erdoberfläche, genannt relevante Region (RI), welches eine Vielzahl von Satelliten (SAT1, SAT2) einsetzt, welche sich entlang mindestens einer nichtstationären Umlaufbahn (O) bewegen, wobei das Verfahren Folgendes beinhaltet:
- Erfassen, durch mindestens zwei der Satelliten, im Zuge eines gleichen Überflugs der relevanten Region und im Zuge von nacheinander folgenden Erfassungszeiträumen, einer Vielzahl von Bildern der Erdoberfläche, genannt Teilbilder, welche jeweils einen Abschnitt (RO1, RO2) der relevanten Region abdecken; **dadurch gekennzeichnet, dass** es zudem Folgendes beinhaltet:
- Erzielen eines Bildes, welches die Gesamtheit der relevanten Region durch Fusion von mindestens zwei solchen Teilbildern für jeden der mindestens zwei Satelliten abdeckt, wobei das Erzielen eines Bildes eine vorbestimmte Zeitverschiebung zwischen deren Erfassungszeiträumen für jeden der mindestens zwei Satelliten aufweist.

2. Verfahren nach Anspruch 1, bei welchem die Teilbilder, genannt Teilbilder gleichen Ranges, gleichzeitig durch die Satelliten erfasst werden; wobei die Anzahl der Satelliten, die oder jede nichtstationäre Umlaufbahn und die Erfassungszeiträume so gewählt sind, dass Teilbilder gleichen Ranges, welche in Kombination aufgenommen werden, eine Teilabdeckung der relevanten Region gewährleisten, welche Abdeckungslücken (LC) aufweist.

3. Verfahren nach Anspruch 2, bei welchem die Teilbilder durch Abtasten erzielt werden, und bei der Erfassung einer ersten Gruppe von Teilbildern gleichen Ranges die Abtastung in der Nähe der Abdeckungslücken beginnt, wohingegen bei der späteren Erfassung einer zweiten Gruppe von Teilbildern gleichen Ranges die Abtastung in der Nähe der Abdeckungslücken endet.

4. Verfahren nach einem der vorhergehenden Ansprüche, bei welchem jedes genannte Teilbild durch Abtasten einer jeweiligen Beobachtungsregion (RO1, RO2) erzielt wird, welche so bestimmt wird, dass sie nicht über die relevante Region hinausragt.

5. Verfahren nach einem der vorhergehenden Ansprüche, welches genau zwei Satelliten einsetzt.

6. Verfahren nach einem der vorhergehenden Ansprüche, bei welchem die Satelliten entlang einer gleichen nichtstationären Umlaufbahn (O) beabstandet sind.

7. Verfahren nach einem der vorhergehenden Ansprüche, bei welchem das Bild, welches die Gesamtheit der relevanten Region abdeckt, durch Fusion von genau zwei solchen Teilbildern für jeden der Satelliten erzielt wird, welche während der nacheinander folgenden Erfassungszeiträume erfasst werden.

8. Verfahren nach einem der vorhergehenden Ansprüche, bei welchem die relevante Region eine Form einer sphärischen Kalotte aufweist.

9. Verfahren nach einem der vorhergehenden Ansprüche, bei welchem die oder jede solche nichtstationäre Umlaufbahn eine elliptische, erhöhte, geneigte Umlaufbahn - vom Typ HEO - ist und die relevante Region durch einen Abschnitt der Erdoberfläche gebildet wird, welcher eine Breite größer als oder gleich einem Schwellenwert L aufweist, wobei L≥50° und vorzugsweise L≥60°.

10. Verfahren nach einem der vorhergehenden Ansprüche, welches zudem einen Schritt des Zuweisens, zu jedem Pixel eines jeden solchen Teilbildes, einer Gruppe von Informationen beinhaltet, welche einen Erfassungszeitpunkt und einen Punkt der Erdoberfläche darstellen, welcher dem Pixel entspricht, und bei welchem die Gruppe von Informationen bei der Fusion der Teilbilder verwendet wird.

11. Bodensegment, Folgendes beinhaltend:
- mindestens einen Satellitenempfänger (RS), welcher konfiguriert ist, um von mindestens zwei Satelliten (SAT1, SAT2), die entlang einer gleichen nichtstationären Umlaufbahn beabstandet sind, Signale zu empfangen, welche Bilder der Erdoberfläche darstellen, genannt Teilbilder, welche jeweils einen Abschnitt (RO1, RO2) einer gleichen relevanten Region (RI) abdecken und im Verlauf nacheinander folgender Erfassungszeiträume im Zuge eines gleichen Überflugs der relevanten Region erfasst werden; und
- einen Datenprozessor (PD);
**dadurch gekennzeichnet, dass** der Datenprozessor konfiguriert ist, um mindestens zwei solche Teilbilder für jeden der mindestens zwei Satelliten zu fusionieren, wobei die von jedem der Satelliten empfangenen Teilbilder eine vorbestimmte Zeitverschiebung zwischen deren Erfassungszeiträumen aufweisen, um ein Bild zu erzielen, welches die Gesamtheit der relevanten Region abdeckt.

12. Satellitensystem zur Beobachtung einer Region der Erdoberfläche, genannt relevante Region (RI), welches Folgendes beinhaltet:
- ein räumliches Segment, welches eine Vielzahl von Satelliten (SAT1, SAT2) beinhaltet, welche sich entlang mindestens einer nichtstationären Umlaufbahn (O) bewegen, welche konfiguriert sind, um im Zuge eines gleichen Überflugs der relevanten Region und im Verlauf von nacheinander folgenden Erfassungszeiträumen eine Vielzahl von Bildern der Erdoberfläche zu erfassen, genannt Teilbilder, welche jeweils einen Abschnitt (RO1, RO2) der relevanten Region abdecken, und um die Teilbilder an ein Bodensegment zu übertragen; und
- ein Bodensegment nach Anspruch 11.

13. System nach Anspruch 12, bei welchem die oder jede solche nichtstationäre Umlaufbahn eine elliptische, erhöhte Umlaufbahn - vom Typ HEO - ist und die relevante Region durch alle Punkte der Erdoberfläche gebildet wird, welche eine Breite größer als oder gleich einem Schwellenwert L≥50° und vorzugsweise L≥60 aufweisen.

## Claims

1. A method for observing a region of the Earth's surface, called region of interest (RI), using a plurality of satellites (SAT1, SAT2) moving along at least one non-stationary orbit (O), said method comprising:
- acquiring, by at least two of said satellites, during a same passage over said region of interest and in successive acquisition periods, a plurality of images of the Earth's surface, called partial images, each covering a portion (RO1, RO2) of said region of interest; **characterized in that** it also comprises:
- obtaining an image covering all of said region of interest by the merging, for each of said at least two satellites, of at least two said partial images, exhibiting a predefined time shift between their acquisition periods, for each of said at least two satellites.

2. The method according to claim 1, wherein partial images, called images of a same rank, are acquired at the same time by said satellites; the number of said satellites, said or each said non-stationary orbit and said acquisition periods being chosen such that partial images of the same rank, taken in combination, ensure a partial coverage of said region of interest, exhibiting coverage gaps (LC).

3. The method according to claim 2, wherein said partial images are obtained by scanning and, upon acquisition of a first set of partial images of the same rank, said scanning begins in proximity to said coverage gaps, whereas, upon subsequent acquisition of a second set of partial images of the same rank, said scanning ends in proximity to said coverage gaps.

4. The method according to one of the preceding claims, wherein each said partial image is obtained by scanning a respective observation region (RO1, RO2), determined such that it does not extend beyond said region of interest.

5. The method according to one of the preceding claims, using exactly two satellites.

6. The method according to one of the preceding claims, wherein said satellites are spaced apart along a same non-stationary orbit (O).

7. The method according to one of the preceding claims, wherein said image covering all of said region of interest is obtained by merging exactly two said partial images for each of said satellites, acquired in successive acquisition periods.

8. The method according to one of the preceding claims, wherein said region of interest is in the form of a spherical cap.

9. The method according to one of the preceding claims, wherein said or each said non-stationary orbit is an inclined highly elliptical orbit - of HEO type - and said region of interest consists of a portion of the Earth's surface exhibiting a latitude greater than or equal to a limit value L, with L≥50° and preferably L≥60°.

10. The method according to one of the preceding claims, also comprising an operation of assignment, to each pixel of each said partial image, of a set of information representative of an acquisition instant and of a point of the Earth's surface corresponding to said pixel, and wherein said set of information is used in the merging of said partial images.

11. A ground segment comprising:
- at least one satellite receiver (RS) configured to receive, from at least two satellites (SAT1, SAT2) spaced apart along a same non-stationary orbit, signals representative of images of the Earth's surface, called partial images, each covering a portion (RO1, RO2) of a same region, called of interest (RI), and acquired in successive acquisition periods during a same passage of said satellites over said region of interest; and
- a data processor (PD);
**characterized in that** said data processor is configured to merge at least two said partial images for each of said at least two satellites, said partial images received from each said satellite exhibiting a predefined time shift between their acquisition periods, in order to obtain an image covering all of said region of interest.

12. A satellite system for observing a region of the Earth's surface, called region of interest (RI), comprising:
- a space segment comprising a plurality of satellites (SAT1, SAT2) moving along at least one non-stationary orbit (O), configured to acquire, during a same passage over said region of interest and in successive acquisition periods, a plurality of images of the Earth's surface, called partial images, each covering a portion (RO1, RO2) of said region of interest, and to transmit said partial images to a ground segment; and
- a ground segment according to claim 11.

13. The system according to claim 12, wherein said or each said non-stationary orbit is a highly elliptical orbit - of HEO type - and said region of interest consists of all the points of the Earth's surface exhibiting a latitude greater than or equal to a limit value L≥50° and preferably L≥60°.
